# EUROPÄISCHE PATENTSCHRIFT

(11) **EP 2 993 950 B1**
(45) Veröffentlichungstag und Bekanntmachung des Hinweises auf die Patenterteilung: **02.05.2018**
(21) Anmeldenummer: 15180318.6
(22) Anmeldetag: 08.08.2015
(51) Int. Cl.: H04W 72/12, H04W 16/14, H04W 72/08, H04W 88/06

(54) **ELEKTRONISCHES REGALETIKETTENSYSTEM UND BETRIEBSVERFAHREN**
ELECTRONIC SHELF LABEL SYSTEM AND METHOD OF OPERATION
SYSTÈME D'ÉTIQUETTE DE GONDOLE ÉLECTRONIQUE ET PROCÉDÉ DE FONCTIONNEMENT

(30) Priorität: 04.09.2014 DE 102014112733; 09.10.2014 DE 102014114666
(43) Veröffentlichungstag der Anmeldung: 09.03.2016
(73) Patentinhaber: LANCOM Systems GmbH, 52146 Würselen (DE)
(72) Erfinder: Arnold, Alfred, Dr., 52062 Aachen (DE); Schallenberg, Christian, 52070 Aachen (DE)
(74) Vertreter: Kohlmann, Kai

(56) Entgegenhaltungen:
- EP-A1- 2 750 096
- US-B1- 8 134 992

## Beschreibung

Die Erfindung betrifft ein elektronisches Regaletikettensystem sowie ein Verfahren zu dessen Betrieb.

Elektronische Regaletikettensysteme erfreuen sich zunehmender Beliebtheit. Elektronische Regaletiketten (ESL= Electronic Shelf Labels) erlauben eine automatische Änderung der Informationen ohne manuellen Zugriff und sind daher für wechselnde Inhalte geeignet, beispielsweise bei Preisetiketten oder bei Regelplatzauszeichnungen. Die Pflege der darzustellenden Inhalte erfolgt zentral im Wege drahtloser, bidirektionaler Datenübertragung.

Die Hauptvorteile elektronischer Regaletikettensysteme bestehen in einer Kosten- und Zeitersparnis aufgrund der vollautomatischen Aktualisierung der auf den elektronischen Anzeigemodulen angezeigten Informationen, in der Prozesssicherheit und Informationsintegrität.

Ein elektronisches Regaletikettensystem umfasst üblicherweise folgende Komponenten:
1. Einen Server, auf dem eine Datenbank mit den auf den elektronischen Anzeigemodulen anzuzeigenden Informationen (Nutzdaten) installiert ist sowie eine Benutzeroberfläche zur Steuerung des elektronischen Regaletikettensystems.
2. Mindestens ein, üblicherweise jedoch mehrere Anzeigemodul(e), wobei jedes elektronische Anzeigemodul eine eindeutige Adresse aufweist, die mit einem Datensatz in der Datenbank auf dem Server verlinkt ist. Das Anzeigemodul weist zur Stromversorgung eine Batterie Batterie auf. Die Anzeigeeinheit des Anzeigemoduls ist zumeist als passive, nichtleuchtende Anzeigeeinheit ausgeführt.
3. Eine Basisstation, auch als Wireless Accesspoint bezeichnet, die als Hardwareschnittstelle die bidirektionale drahtlose Datenübertragung zwischen dem Server und den Anzeigemodulen steuert. Die drahtlose Datenübertragung erfolgt insbesondere mittels Funk, teilweise aber auch mit infrarotem oder auch sichtbarem Licht.

Die batteriebetriebenen elektronischen Anzeigemodule üblicher elektronischer Regaletikettensysteme weisen Niedrigenergie-Funksysteme auf, die für eine bidirektionale Datenübertragung im ISM-Band mit einem herstellerspezifischen Niedrigenergie-Funkprotokoll eingerichtet sind. Als ISM-Bänder werden Frequenzbereiche bezeichnet, die durch Hochfrequenz-Geräte in Industrie, Wissenschaft, Medizin sowie in häuslichen und ähnlichen Bereichen genutzt werden können. Einige ISM-Bänder werden auch für die Datenübertragung, insbesondere nach dem WLAN-Standard (IEEE 802.11) oder Bluetooth-Standard (IEEE 802.15.1) verwendet, ohne das es für diese Nutzung einer Einzel-Frequenzzuweisung bedarf. Durch die gemeinsame Nutzung kann es insbesondere in den besonders häufig genutzten ISM-Bändern, wie etwa dem 433 MHz und dem 2,4 GHz-Band leicht zu Störungen zwischen verschiedenen Geräten kommen.

Um eine möglichst lange Lebensdauer der Batterien der elektronischen Anzeigemodule zu gewährleisten, kann die Datenübertragung von elektronischen Regaletikettensystemen auf dem ISM-Band jedoch nicht mit üblichen Funkprotokollen nach dem WLAN-Standard durchgeführt werden. Als Niedrigenergie-Funkprotokoll auf einem ISM-Band ist beispielsweise der Industriestandard ZigBee zur drahtlosen Gebäudeautomation bekannt, der auf dem Standard IEEE 802.15.4 zum Aufbau eines Wireless Personal Area Network (WPAN) basiert. Es handelt sich um einen Standard zur drahtlosen Datenübertragung für Geräte mit geringer Leistungsaufnahme und niedriger Datenübertragungsrate. Bei Niedrigenergie-Funkprotokollen stehen folglich nicht eine hohe Datenübertragungsrate, sondern das Energiemanagement und die Einfachheit des Protokolls im Vordergrund. Charakteristisch für ein Niedrigenergie-Funkprotokoll nach dem IEEE-802.15.4 Standard sind lange Ruhephasen der eingebundenen Anzeigemodule, wodurch diese die meiste Zeit in einem energiesparenden Betriebszustand (Schlafmodus) verweilen können. Dadurch können die batteriebetriebenen Anzeigemodule Laufzeiten von mehr als sechs Monaten erreichen.

Bei der Datenübertragung im ISM-Band zwischen den elektronischen Anzeigemodulen und der Basisstation kann es zu Kollisionen mit anderen Funkübertragungen auf demselben ISM-Band kommen. Jede Kollision bewirkt eine gestörte Datenübertragung zu den Anzeigemodulen und erfordert damit eine Wiederholung der Datenübertragung des Datenpakets, die einen zusätzlichen Energiebedarf des Anzeigemoduls erfordert und damit eine Verkürzung der Batterielebensdauer bewirkt. Störungen aufgrund von Kollisionen verschiedener Datenübertragungen auf einem ISM-Band sind umso wahrscheinlicher, je geringer die räumliche Distanz beispielsweise zwischen einem Niedrigenergie-Funksystem und einem Bluetooth-Funksystem ist, das auf dem selben ISM-Band arbeitet.

Von den Anwendern elektronischer Regaletikettensysteme wird gefordert, den Installationsaufwand für eine Basisstation für den Niedrigenergiefunk zusätzlich zu der meistens bereits vorhandenen WLAN-Infrastruktur zu vermeiden bzw. zu minimieren.

Die EP 2 750 096 A1 offenbart ein elektronisches Regaletikettensystem umfassend mehrere Anzeigemodule, wobei jedes Anzeigemodul eine als LED- oder LCD-ausgebildete Anzeigeeinheit, eine Speichereinheit, eine Steuerungseinheit sowie ein Funksystem aufweist. Das Regaletikettensystem verfügt ferner über eine Basisstation mit einem Gehäuse in dem ein Funksystem angeordnet ist, dass für eine bidirektionale Datenübertragung zwischen der Basisstation und jedem Anzeigemodul eingerichtet ist. Die Basisstation erfüllt zwei wesentliche Aufgaben, nämlich einen Schlafbefehl für die Anzeigemodule zur Verfügung zu stellen und in einem aktiven Modus Daten an die Anzeigemodule zu übertragen. Um Kommunikationsstörungen bei der Datenübertragung zwischen der Basisstation und den Anzeigemodulen zu vermeiden, weisen die Funksysteme von der Basisstation und jedem Anzeigemodul die Möglichkeit auf, Daten auf unterschiedlichen Frequenzbändern zu übermitteln. Beispielsweise können die Schlafbefehle mit der ersten Frequenz und die Daten für die einzelnen Anzeigemodule mit einer zweiten Frequenz übertragen werden.

Ausgehend von diesem Stand der Technik liegt der Erfindung die Aufgabe zugrunde, den zusätzlichen Installationsaufwand für eine Basisstation für den Niedrigenergiefunk zu vermeiden bzw. zu minimieren und eine Verkürzung der Lebensdauer der Batterien der Anzeigemodule zu vermeiden.

Außerdem soll eine Basisstation für ein elektronisches Regaletikettensystem mit erweiterter Funktionalität angegeben werden.

Schließlich soll ein Verfahren zum Betrieb eines elektronischen Regaletikettensystems vorgeschlagen werden, dessen Basisstation über eine erweiterte Funktionalität verfügt.

Die Lösung dieser Aufgabe basiert auf dem Gedanken, die Basisstationsfunktionalität für Niedrigenergie-Funk in eine WLAN- Basisstation (IEEE-Standard 802.11) zu integrieren, um den ansonsten erforderlichen zusätzlichen Installationsaufwand für eine Basisstation für den Niedrigenergiefunk zu vermeiden. Hierzu werden ein Niedrigenergie-Funksystem und ein WLAN-Funksystem in einem Gerätegehäuse zusammengefasst. Beide Funksysteme sind geeignet, bidirektional Daten zu mehreren elektronischen Anzeigemodulen des ELS-Systems beziehungsweise Clients in dem WLAN in demselben ISM-Band zu übertragen, die sich zuvor an der Basisstation anmelden. Um trotz der räumlichen Nähe zwischen dem WLAN-Funksystem und dem Niedrigenergie-Funksystem in dem Gerätegehäuse der Basisstation Störungen der Datenübertragung zwischen der Basisstation und jedem Anzeigemodul zu vermeiden, verfügt die Basisstation über eine Steuerung die derart eingerichtet ist, dass Aussendungen des WLAN-Funksystems unterbunden werden, wenn und solange eine Datenübertragung von mindestens einem Niedrigenergie-Funksystems eines der Anzeigemodule zu dem Niedrigenergie-Funksystem in der Basisstation stattfindet.

Das WLAN- Funksystem stellt sämtliche laufenden Aussendungen ein und beginnt keine neuen Aussendungen, solange eine Datenübertragung von mindestens einem Niedrigenergie-Funksystem eines der Anzeigemodule zu dem Niedrigenergie-Funksystem in der Basisstation stattfindet. Hierdurch wird erreicht, dass der Empfänger des Niedrigenergie-Funksystems in der Basisstation nicht von dem direkt benachbarten Sender des WLAN-Funksystem gestört wird. Eventuell in diesem Zeitraum weiterhin stattfindende Aussendungen der weiter entfernt liegenden WLAN- Clients erreichen das Niedrigenergie-Funksystem in der Basisstation mit einer so geringem Signalstärke, dass der Empfänger des Niedrigenergie-Funksystem nicht übersteuert wird und die parallel übertragenen Daten von den Anzeigemodulen selektiv aus den unterschiedlich starken Signalen auf dem ISM-Band empfangen kann.

Nach erfolgreichem Empfang von Nutzdaten in einem Anzeigemodul (z.B. ein Bild mit den anzuzeigenden Informationen) wird von dem Niedrigenergie-Funksystem des Anzeigemoduls eine Quittung an das Niedrigenergie-Funksystem der Basisstation übertragen. Durch das Vermeiden von Störungen des Empfängers des Niedrigenergie-Funksystems in der Basisstation wird gewährleistet, dass die Quittung dort einwandfrei empfangen werden kann. Hierdurch werden wiederholte Übertragungen bereits ordnungsgemäß empfangener Nutzdaten an das Anzeigemodul vermieden und dadurch die Haltedauer der Batterie des Anzeigemoduls geschont.

Des weiteren gewährleistet die erfindungsgemäße Lösung, dass auch andere Aussendungen der Anzeigemodule, beispielsweise periodische Informationen über den Status des Energiespeichers in der Basisstation ungestört empfangen werden.

Das verwendete Niedrigenergie-Funkprotokoll ist derart programmiert, dass Datenübertragungen von einem Niedrigenergie-Funksystem eines der Anzeigemodule zu dem Niedrigenergie-Funksystem in der Basisstation ausschließlich in Zeitschlitzen erfolgen. Aufgrund des Zeitschlitzverfahrens zur Steuerung der Datenübertragung ist der Basisstation bekannt, in welchen insbesondere periodisch wiederkehrenden Zeiträumen Aussendungen von den Niedrigenergie-Funksystemen der elektronischen Anzeigemodule zu erwarten sind. Diese Informationen sind nach Anmeldung an der Basisstation auch jedem Anzeigemodul bekannt.

Bei dem verwendeten Niedrigenergie-Funkprotokoll stehen keine hohe Datenübertragungsrate, sondern das Energiemanagement und die Einfachheit des Protokolls im Vordergrund. Die Sendeleistung der mit dem Niedrigenergie-Funkprotokoll betriebenen Niedrigenergie-Funksysteme sowohl in der Basisstation als auch den Anzeigeeinheiten beträgt maximal 10 mW.

In Verbindung mit den passiven, nichtleuchtenden Anzeigeeinheiten der Anzeigemodule wird eine lange Batteriehaltedauer erreicht. Derartige passive, nichtleuchtende Anzeigeeinheiten werden auch als E-Paper-Display bezeichnet. E-Paper-Displays reflektieren das Licht wie herkömmliches Papier. Die Informationen werden insbesondere dauerhaft angezeigt, ohne dass dafür eine Erhaltungsspannung erforderlich ist. Lediglich für das Ändern der angezeigten Informationen wird elektrische Energie benötigt. Bei den passiven, nichtleuchtenden Anzeigeeinheiten handelt es sich insbesondere um elektrophoretische Anzeigen oder bistabile LCDs.

Die Funksysteme in der Basisstation, in den Anzeigemodulen sowie in den WLAN-Clients können anstelle eines separaten Senders und Empfängers jeweils ein Transceiver, das heißt einem kombinierten Sender Empfänger aufweisen. Durch das zusammenfassen von Sender und Empfänger in einer Baugruppe lassen sich der Bauraum und die Anzahl der erforderlichen Antennen reduzieren.

Die Steuerung in der Basisstation weist vorzugsweise eine Steuerleitung zwischen dem in dem Gehäuse der Basisstation angeordneten WLAN-Funksystem und dem Niedrigenergie-Funksystem auf, die zur Übertragung eines Steuersignals für die Dauer der Datenübertragung von mindestens einem Niedrigenergie-Funksystem eines der Anzeigemodule zu dem Niedrigenergie-Funksystem in der Basisstation eingerichtet ist. Gegebenenfalls kann die Steuerung außerdem derart eingerichtet sein, dass Aussendungen des in dem Gehäuse der Basisstation angeordneten WLAN-Funksystems auch dann unterbunden werden, wenn und solange eine Datenübertragung von dem Niedrigenergie-Funksystem in der Basisstation zu mindestens einem Niedrigenergie-Funksystem eines der Anzeigemodule stattfindet. In Versuchen hat sich allerdings herausgestellt, dass bei Übertragungen in Richtung der Anzeigemodule das gleichzeitig sendende WLAN-Funksystem in der Basisstation in der Regel keine Probleme bereitet.

Weiter umfasst die Steuerung ein mit der Steuerleitung verbundenes Schaltglied, das bei aktivem Steuersignal während der Datenübertragung die Aussendung des in dem Gehäuse der Basisstation angeordneten WLAN-Funksystems unterbindet.

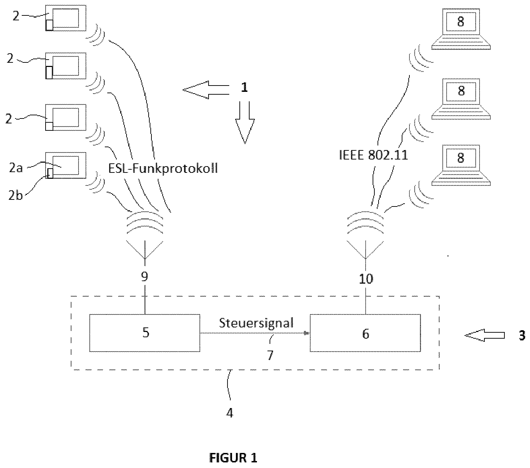

Nachfolgend wird ein elektronisches Regaletikettensystem sowie das Verfahren zu dessen Betrieb anhand der Figur 1 näher erläutert:
Figur 1 zeigt ein elektronisches Regaletikettensystem 1 umfassend mehrere elektronische Anzeigemodule 2 sowie eine Basisstation 3, die an einen in Figur 1 nicht dargestellten Server angebunden ist.

In dem durch die gestrichelte Linie angedeuteten Gehäuse 4 der Basisstation 3 sind ein Niedrigenergie-Funksystem 5 sowie ein WLAN-Funksystem 6 angeordnet. Ferner befindet sich in dem Gehäuse 4 eine Steuerung mit einer Steuerleitung 7 zwischen dem Niedrigenergie-Funksystem 5 und dem WLAN-Funksystem 6. Sowohl das Niedrigenergie-Funksystem 5, als auch das WLAN-Funksystem 6 verfügen jeweils über eine Antenne 9, 10.

Das WLAN-Funksystem 6 in dem Gehäuse 4 der Basisstation gewährleistet die WLAN-Basisstationsfunktionalität für die Koordination der Datenübertragung nach dem WLAN-Standard

(IEEE 802.11) in einem Funknetzwerk mit mehreren Clients 8. Bei den Clients 8 kann es sich beispielsweise um Personal Computer handeln. Die WLAN- Clients 8 verfügen jeweils über ein WLAN-Funksystem für eine Kommunikation nach dem WLAN-Standard (IEEE 802.11) in einem ISM-Band.

Das Niedrigenergie-Funksystem 5 in dem Gehäuse 4 der Basisstation gewährleistet die Basisstationsfunktionalität für die Koordination der Datenübertragung zwischen dem Server und mehreren Anzeigemodulen 2 in einem ISM-Band eines Funknetzwerks. Jedes Anzeigemodul 2 verfügt über eine eigene, autarke Spannungsversorgung in Form einer Batterie. In dem Gehäuse jedes Anzeigemoduls 2 befindet sich darüber hinaus eine Anzeigeeinheit 2a in Form eines bistabilen LCD-Displays, auf der die Nutzinformationen, wie beispielsweise der Preis eines Produktes, angezeigt werden. Die den jeweiligen Anzeigemodulen 2 zugeordneten Nutzinformationen sind in einer Datenbank auf dem Server gespeichert. Außerdem verfügt jedes Anzeigemodul 2 über ein Niedrigenergie-Funksystem 2b, das für eine bidirektionale Datenübertragung in dem ISM-Band eingerichtet ist.

Das beschriebene Regaletikettensystem 1 arbeitet wie folgt:
Zwischen dem Niedrigenergie-Funksystem 5 in der Basisstation 3 und dem Niedrigenergie-Funksystem 2b in den Anzeigemodulen 2 werden Daten im ISM-Band mit einem ESL-Funkprotokoll übertragen. Das ESL-Funkprotokoll ist derart programmiert, dass Daten von dem Niedrigenergie-Funksystem 2b der Anzeigemodule 2 zu dem Niedrigenergie-Funksystem 5 in der Basisstation 3 ausschließlich in periodisch wiederkehrenden Zeitabschnitten definierter Länge (Zeitschlitzen) übertragen werden. Im Niedrigenergie-Funksystem 5 der Basisstation 3 ist daher bekannt, wann Aussendungen von dem Niedrigenergie-Funksystem 2b der Anzeigemodule 2 zu erwarten sind.

Desweiteren werden von dem in den Gehäuse 4 der Basisstation 3 angeordneten WLAN-Funksystem 6 in demselben ISM-Band nach dem WLAN-Standard (IEEE 802.11) für Kommunikation in Funknetzwerken und den WLAN-Clients 8 Daten übertragen. Die Aussendung beziehungsweise Übertragung der Daten von dem WLAN-Funksystem 6 zu den WLAN-Clients 8 wird jedoch von der Steuerung in der Basisstation 3 automatisch unterbunden wenn und solange eine Datenübertragung von mindestens einem der Niedrigenergie-Funksysteme 2b eines der Anzeigemodule 2 zu dem Niedrigenergie-Funksystem 5 in der Basisstation 3 stattfindet. Die Steuerung bewirkt daher, dass während der durch das Niedrigenergie-Funkprotokoll definierten Zeitschlitze keine Aussendungen durch das WLAN-Funksystem 6 stattfinden.

Um die Aussendungen des WLAN-Funksystems 6 zu unterbinden wird über die Steuerleitung 7 ein Steuersignal für die Dauer der Datenübertragung von jedem Niedrigenergie-Funksystem 2b zu dem Niedrigenergie-Funksystem 5 in der Basisstation übertragen, wobei das Steuersignal die Aussendung des WLAN-Funksystems 6 unterbindet. Die Aussendung wird durch Abschalten des Senders bzw. das Umschalten des Transceivers auf den Empfangsbetrieb unterbunden.

Eine Störung des Empfängers des Niedrigenergie-Funksystems 5 durch den Sender des WLAN-Funksystems 6 wird während der Zeitschlitze verhindert. Hierdurch wird erreicht, dass der Empfänger des Niedrigenergie-Funksystems 5 nicht gestört wird, sodass Aussendungen der Niedrigenergie-Funksysteme 2b der Anzeigemodule 2 einwandfrei empfangen werden und nicht wiederholt werden müssen. Hierdurch wird die Batterielebensdauer der Anzeigemodule 2 erhöht.

Die Aussendungen der WLAN-Funksysteme in den WLAN-Clients 8 sind für den Empfänger des Niedrigenergie-Funksystems 5 weit weniger störend, da die WLAN-Clients 8 deutlich weiter von dem Empfänger des Niedrigenergie-Funksystems 5 in der Basisstation 3 entfernt sind als das WLAN-Funksystem 6. In gleicher Weise werden die Empfänger der Niedrigenergie-Funksysteme 2b in den Anzeigemodulen 2 durch die Aussendung der regelmäßig weiter entfernt stehenden WLAN-Clients 8 nicht oder nur in äußerst geringem Umfang gestört.

### Bezugszeichenliste:

- 1: Regaletikettensystem
- 2: Anzeigemodule
- 2a: Anzeigeeinheit
- 2b: Niedrigenergie-Funksystem
- 3: Basisstation
- 4: Gehäuse
- 5: Niedrigenergie-Funksystem
- 6: WLAN-Funksystem
- 7: Steuerleitung
- 8: WLAN-Client
- 9: Antenne
- 10: Antenne

## Patentansprüche

1. Elektronisches Regaletikettensystem (1) umfassend
- mehrere elektronische Anzeigemodule (2), wobei jedes Anzeigemodul (2) mindestens eine Batterie zur Spannungsversorgung des Anzeigemoduls (2), mindestens eine passive, nichtleuchtende Anzeigeeinheit (2a) und ein Niedrigenergie-Funksystem (2b) aufweist, das für eine bidirektionale Datenübertragung in einem ISM-Band mit einem Niedrigenergie-Funkprotokoll eingerichtet ist,
- eine Basisstation (3) mit einem Gehäuse (4) in dem ein Niedrigenergie-Funksystem (5) angeordnet ist, das für eine bidirektionale Datenübertragung in dem ISM-Band zwischen der Basisstation (3) und jedem Anzeigemodul (2) mit dem Niedrigenergie-Funkprotokoll eingerichtet ist,
- wobei das Niedrigenergie-Funkprotokoll derart programmiert ist, dass Datenübertragungen von einem Niedrigenergie-Funksystem (2b) eines der Anzeigemodule (2) zu dem Niedrigenergie-Funksystem (5) in der Basisstation (3) ausschließlich in Zeitschlitzen erfolgen, wobei dem Niedrigenergie-Funksystem (5) der Basisstation (3) aufgrund des Zeitschlitzverfahrens bekannt ist, wann Aussendungen von den Niedrigenergie-Funksystemen (2b) der Anzeigemodule (2) zu erwarten sind,
- wobei die Sendeleistung der der mit dem Niedrigenergie-Funkprotokoll betriebenen Niedrigenergie-Funksysteme (2b, 5) sowohl in der Basisstation (3) als auch den Anzeigemodulen (2) maximal 10 mW beträgt,
- ein in dem Gehäuse (4) der Basisstation (3) zusätzlich zu dem Niedrigenergie-Funksystem (5) angeordnetes WLAN-Funksystem (6), das ebenfalls für eine Datenübertragung in dem ISM-Band, jedoch nach dem IEEE-Standard 802.11 für Kommunikation in Funknetzwerken zwischen der Basisstation (3) und mehreren WLAN-Clients (8) eingerichtet ist, wobei es bei gemeinsamer Nutzung des ISM-Bandes zu Kollisionen mit den Datenübertragungen zwischen den elektronischen Anzeigemodulen (2) und der Basisstation (3) kommen kann,
- eine Steuerung die derart eingerichtet ist, dass Aussendungen des in dem Gehäuse (4) der Basisstation (3) angeordneten WLAN-Funksystems (6) unterbunden werden, wenn und solange eine Datenübertragung von mindestens einem Niedrigenergie-Funksystem (2b) eines der Anzeigemodule (2) zu dem Niedrigenergie-Funksystem (5) in der Basisstation (3) stattfindet, wobei jedoch eventuell in diesem Zeitraum weiterhin stattfindende Aussendungen der WLAN- Clients (8) parallel an das WLAN-Funksystem (6) der Basisstation (3) übertragen werden.

2. Elektronisches Regaletikettensystem (1) nach Anspruch 1, **dadurch gekennzeichnet, dass** die Steuerung außerdem derart eingerichtet ist, dass Aussendungen des in dem Gehäuse (4) der Basisstation (3) angeordneten WLAN-Funksystems (6) unterbunden werden, wenn und solange eine Datenübertragung von dem Niedrigenergie-Funksystem (5) in der Basisstation (3) zu mindestens einem Niedrigenergie-Funksystem (2b) eines der Anzeigemodule (2) stattfindet.

3. Elektronisches Regaletikettensystem (1) nach Anspruch 1 oder 2, **dadurch gekennzeichnet, dass** das Niedrigenergie-Funksystem (2b, 5) der Basisstation (3) und/oder der Anzeigemodule (2) einen Transceiver für die bidirektionale Datenübertragung aufweist.

4. Elektronisches Regaletikettensystem (1) nach einem der Ansprüche 1 bis 3, **dadurch gekennzeichnet, dass** das WLAN-Funksystem (6) der Basisstation (3) und/oder der WLAN-Clients (8) einen Transceiver für die Datenübertragung aufweist.

5. Elektronisches Regaletikettensystem (1) nach einem der Ansprüche 1 bis 4, **dadurch gekennzeichnet, dass** die Steuerung eine Steuerleitung (7) zwischen dem in dem Gehäuse (4) der Basisstation (3) angeordneten WLAN-Funksystem (6) und dem Niedrigenergie-Funksystem (5) in der Basisstation (3) aufweist, die zur Übertragung eines Steuersignals für die Dauer der Datenübertragung von mindestens einem Niedrigenergie-Funksystem (2b) eines der Anzeigemodule (2) zu dem Niedrigenergie-Funksystem (5) in der Basisstation (3) eingerichtet ist.

6. Elektronisches Regaletikettensystem (1) nach Anspruch 5, **dadurch gekennzeichnet, dass** die Steuerleitung (7) außerdem zur Übertragung eines Steuersignals für die Dauer der Datenübertragung von dem Niedrigenergie-Funksystem (5) in der Basisstation (3) zu mindestens einem Niedrigenergie-Funksystem (2b) eines der Anzeigemodule (2) eingerichtet ist.

7. Elektronisches Regaletikettensystem (1) nach Anspruch 5 oder 6, **dadurch gekennzeichnet, dass** die Steuerung ein mit der Steuerleitung (7) verbundenes Schaltglied umfasst, das bei aktivem Steuersignal die Aussendungen des in dem Gehäuse (4) der Basisstation (3) angeordneten WLAN-Funksystems (6) unterbindet.

8. Elektronisches Regaletikettensystem (1) nach einem der Ansprüche 1 bis 7, **dadurch gekennzeichnet, dass** der Abstand zwischen dem Niedrigenergie-Funksystem (5) und dem WLAN-Funksystem (6) in der Basisstation (3) geringer ist als der Abstand zwischen jedem WLAN-Client (8) und dem Niedrigenergie-Funksystem (5) in der Basisstation (3) .

9. Verfahren zum Betrieb eines elektronischen Regaletikettensystem (1) mit mehreren elektronischen Anzeigemodulen (2), wobei jedes Anzeigemodul (2) mindestens eine Batterie zur Spannungsversorgung des Anzeigemoduls (2), mindestens eine passive, nichtleuchtende Anzeigeeinheit (2a) und ein Niedrigenergie-Funksystem (2b) aufweist, sowie einer Basisstation (3) mit einem Gehäuse (4), in dem ein Niedrigenergie-Funksystem (5) und zusätzlich ein WLAN-Funksystem (6) angeordnet sind, wobei die Sendeleistung der mit einem Niedrigenergie-Funkprotokoll betriebenen Niedrigenergie-Funksysteme (2b, 5) sowohl in der Basisstation (3) als auch den Anzeigemodulen (2) maximal 10 mW beträgt,
umfassend die Schritte:
- bidirektionales Übertragen von Daten im ISM-Band mit dem Niedrigenergie-Funkprotokoll zwischen mindestens einem Niedrigenergie-Funksystem (2b) in einem der Anzeigemodule (2) und dem Niedrigenergie-Funksystem (5) der Basisstation (3),
- wobei nach dem Niedrigenergie-Funkprotokoll Daten von einem Niedrigenergie-Funksystem (2b) eines der Anzeigemodule (2) zu dem Niedrigenergie-Funksystem (5) in der Basisstation (3) ausschließlich in Zeitschlitzen übertragen werden, wobei dem Niedrigenergie-Funksystem (5) der Basisstation (3) aufgrund des Zeitschlitzverfahrens bekannt ist, wann Aussendungen von den Niedrigenergie-Funksystemen (2b) der Anzeigemodule (2) zu erwarten sind,
- Übertragen von Daten zwischen dem in dem Gehäuse (4) der Basisstation (3) angeordneten WLAN-Funksystem in dem ISM-Band, jedoch nach dem IEEE-Standard 802.11 für Kommunikation in Funknetzwerken und mehreren WLAN-Clients (8), wobei es bei gemeinsamer Nutzung des ISM-Bandes zu Kollisionen mit den Datenübertragungen zwischen den elektronischen Anzeigemodulen (2) und der Basisstation (3) kommen kann,
- Unterbinden der Aussendungen des in dem Gehäuse (4) der Basisstation (3) angeordneten WLAN-Funksystems (5) zur Übertragung von Daten, wenn und solange eine Datenübertragung von mindestens einem Niedrigenergie-Funksystem (2b) eines der Anzeigemodule (2) zu dem Niedrigenergie-Funksystem (5) in der Basisstation (3) stattfindet, wobei jedoch eventuell in diesem Zeitraum weiterhin stattfindende Aussendungen der WLAN- Clients (8) parallel an das WLAN-Funksystem (6) der Basisstation (3) übertragen werden.

10. Verfahren nach Anspruch 9, **dadurch gekennzeichnet, dass** über eine Steuerleitung (7) zwischen dem in dem Gehäuse (4) der Basisstation (3) angeordneten WLAN-Funksystem (6) und dem Niedrigenergie-Funksystem (5) in der Basisstation (3) ein Steuersignal für die Dauer der Datenübertragung von jedem Niedrigenergie-Funksystem (2b) eines der Anzeigemodule (2) zu dem Niedrigenergie-Funksystem (5) in der Basisstation (3) übertragen wird und das Steuersignal die Aussendungen des in dem Gehäuse (4) der Basisstation (3) angeordneten WLAN-Funksystems (6) unterbindet.

11. Verfahren nach Anspruch 10, **dadurch gekennzeichnet, dass** über die Steuerleitung (7) außerdem ein Steuersignal für die Dauer der Datenübertragung von dem Niedrigenergie-Funksystem (5) in der Basisstation (3) zu jedem Niedrigenergie-Funksystem (2b) eines der Anzeigemodule (2) übertragen wird und das Steuersignal die Aussendungen des in dem Gehäuse (4) der Basisstation (3) angeordneten WLAN-Funksystems (6) unterbindet.

12. In einem Gehäuse (4) angeordnete Basisstation (3) für ein Elektronisches Regaletikettensystem, wobei in dem Gehäuse (4) ein Niedrigenergie-Funksystem (5) angeordnet ist, das für eine bidirektionale Datenübertragung in einem ISM-Band zwischen der Basisstation (3) und mehreren Anzeigemodulen (2) mit einem Niedrigenergie-Funkprotokoll eingerichtet ist, wobei jedes Anzeigemodul (2) mindestens eine Batterie zur Spannungsversorgung des Anzeigemoduls, mindestens eine passive, nichtleuchtende Anzeigeeinheit (2a) und ein Niedrigenergie-Funksystem (2b) mit einer maximalen Sendeleistung von 10 mW aufweist, **dadurch gekennzeichnet, dass**
- das Niedrigenergie-Funkprotokoll derart programmiert ist, dass Datenübertragungen von einem Niedrigenergie-Funksystem (2b) eines der Anzeigemodule (2) zu dem Niedrigenergie-Funksystem (5) in der Basisstation (3) ausschließlich in Zeitschlitzen erfolgen, wobei dem Niedrigenergie-Funksystem (5) der Basisstation (3) aufgrund des Zeitschlitzverfahrens bekannt ist, wann Aussendungen von den Niedrigenergie-Funksystemen (2b) der Anzeigemodule (2) zu erwarten sind,
- in dem Gehäuse (4) der Basisstation (3) zusätzlich ein WLAN-Funksystem (6) angeordnet ist, das für eine Datenübertragung in dem ISM-Band, jedoch nach dem IEEE-Standard 802.11 für Kommunikation in Funknetzwerken zwischen der Basisstation (3) und mehreren WLAN-Clients (8) eingerichtet ist, wobei es bei gemeinsamer Nutzung des ISM-Bandes zu Kollisionen mit den Datenübertragungen zwischen den elektronischen Anzeigemodulen (2) und der Basisstation (3) kommen kann,
- die Sendeleistung der mit dem Niedrigenergie-Funkprotokoll betriebenen Niedrigenergie-Funksysteme (2a, 5) sowohl in der Basisstation (3) als auch den Anzeigemodulen (2) maximal 10 mW beträgt, und
- in dem Gehäuse (4) eine Steuerung angeordnet ist, die derart eingerichtet ist, dass Aussendungen des in dem Gehäuse der Basisstation (3) angeordneten WLAN-Funksystems (6) unterbunden werden, wenn und solange eine Datenübertragung von mindestens einem Niedrigenergie-Funksystem (2b) eines der Anzeigemodule (2) zu dem Niedrigenergie-Funksystem (5) in der Basisstation (3) stattfindet, wobei jedoch eventuell in diesem Zeitraum weiterhin stattfindende Aussendungen der WLAN- Clients (8) parallel an das WLAN-Funksystem (6) der Basisstation (3) übertragen werden.

13. In einem Gehäuse (4) angeordnete Basisstation (3) nach Anspruch 12, **dadurch gekennzeichnet, dass** die Steuerung außerdem derart eingerichtet ist, dass Aussendungen des in dem Gehäuse (4) der Basisstation (3) angeordneten WLAN-Funksystems (6) unterbunden werden, wenn und solange eine Datenübertragung von dem Niedrigenergie-Funksystem (5) in der Basisstation (3) zu mindestens einem Niedrigenergie-Funksystem (2b) eines der Anzeigemodule (2) stattfindet.

14. In einem Gehäuse (4) angeordnete Basisstation (3) nach Anspruch 12 oder 13, **dadurch gekennzeichnet, dass** die Steuerung eine Steuerleitung (7) zwischen dem in dem Gehäuse (4) der Basisstation (3) angeordneten WLAN-Funksystem (6) und dem Niedrigenergie-Funksystem (5) in der Basisstation (3) aufweist, die zur Übertragung eines Steuersignals für die Dauer der Datenübertragung von mindestens einem Niedrigenergie-Funksystem (2b) eines der Anzeigemodule (2) zu dem Niedrigenergie-Funksystem (5) in der Basisstation (3) eingerichtet ist.

15. In einem Gehäuse (4) angeordnete Basisstation (3) nach Anspruch 14, **dadurch gekennzeichnet, dass** die Steuerleitung (7) außerdem zur Übertragung eines Steuersignals für die Dauer der Datenübertragung von dem Niedrigenergie-Funksystem (5) in der Basisstation (3) zu mindestens einem Niedrigenergie-Funksystem (2b) eines der Anzeigemodule (2) eingerichtet ist.

16. In einem Gehäuse(4) angeordnete Basisstation (3) nach Anspruch 15, **dadurch gekennzeichnet, dass** die Steuerung ein mit der Steuerleitung (7) verbundenes Schaltglied umfasst, das bei aktivem Steuersignal die Aussendungen des in dem Gehäuse (4) der Basisstation (3) angeordneten WLAN-Funksystems (6) unterbindet.

## Claims

1. Electronic shelf label system (1) comprising
- a plurality of electronic display modules (2), wherein each display module (2) comprises at least one battery -for the power supply of the display module (2), at least one passive, non-luminous display unit (2a) and a low-energy radio system (2b) which is adapted for a bidirectional data transmission in an ISM band with a low-energy radio protocol,
- a base station (3) with a housing (4) in which a low-energy radio system (5) is arranged which is adapted for a bidirectional data transmission in the ISM band between the base station ('3) and each display module (2) with the low-energy radio protocol,
- wherein the low-energy radio protocol is programmed in such a manner that data transmissions from a low-energy radio system (2b) of one of the display modules (2) to the low-energy radio system (5) in the base station (3) take place exclusively in time slots, wherein as a result of the time slot method, the low-energy radio system (5) knows when transmissions from the low-energy radio system (2b) of the display modules (2) are to be expected,
- wherein the transmission power of the low-energy radio systems (2b, 5) operated with the low-energy radio protocol is a maximum of 10 mW both in the base station (3) and also the display modules (2),
- a WLAN radio system (6) arranged in the housing (4) of the base station (3) in addition to the low-energy radio system (5), which is likewise adapted for data transmission in the ISM band but according to the IEEE standard 802.11 for communication in radio networks between the base station (3) and a plurality of WLAN clients (8), wherein in cases of joint use of the ISM band, collisions with the data transmissions between the electronic display modules (2) and the base station (3) can occur,
- a controller which is adapted in such a manner that transmissions of the WLAN radio system (6) arranged in the housing (4) of the base station (3) are prevented when and as long as a data transmission takes place from at least one low-energy radio system (2b) of one of the display modules (2) to the low-energy radio system (5) in the base station (3), wherein however transmissions of the WLAN client (8) which still possibly take place in this time interval are transmitted parallel to the WLAN radio system (6) of the base station (3).

2. The electronic shelf label system (1) according to claim 1, **characterized in that** the controller is additionally adapted in such a manner that transmissions of the WLAN radio system (6) arranged in the housing (4) of the base station (3) are prevented when and as long as a data transmission takes place from the low-energy radio system (5) in the base station (3) to at least one low-energy radio system (2b) of one of the display modules (2).

3. The electronic shelf label system (1) according to claim 1 or 2, **characterized in that** the low-energy radio system (2b, 5) of the base station (3) and/or the display module (2) has a transceiver for the bidirectional data transmission.

4. The electronic shelf label system (1) according to one of claims 1 to 3, **characterized in that** the WLAN radio system (6) of the base station (3) and/or the WLAN client (8) has a transceiver for the data transmission.

5. The electronic shelf label system (1) according to one of claims 1 to 4, **characterized in that** the controller comprises a control line (7) between the WLAN radio system (6) arranged in the housing (4) of the base station (3) and the low-energy radio system (5) in the base station (3) which is adapted for transmission of a control signal for the duration of the data transmission from at least one low-energy radio system (2b) of one of the display modules (2) to the low-energy radio system (5) in the base station (3).

6. The electronic shelf label system (1) according to claim 5, **characterized in that** the control line (7) is additionally adapted for transmission of a control signal for the duration of the data transmission from the low-energy radio system (5) in the base station (3) to at least one low-energy radio system (2b) of one of the display modules (2).

7. The electronic shelf label system (1) according to claim 5 or 6, **characterized in that** the controller comprises a switching element connected to the control line (7) which in the case of an active control signal prevents the transmissions of the WLAN radio system (6) arranged in the housing (4) of the base station (3) .

8. The electronic shelf label system (1) according to one of claims 1 to 7, **characterized in that** the distance between the low-energy radio system (5) and the WLAN radio system (6) in the base station (3) is shorter than the distance between each WLAN client (8) and the low-energy radio system (5) in the base station (3).

9. Method for operating an electronic shelf label system (1) comprising a plurality of electronic display modules (2), wherein each display module (2) comprises at least one battery for the power supply of the display module (2), at least one passive non-luminous display unit (2a) and a low-energy radio system (2b) as well as a base station (3) with a housing (4), in which a low-energy radio system (5) and in addition a WLAN radio system (6) are arranged, wherein the transmission power of the low-energy radio systems (2b, 5) operated with a low-energy radio protocol is a maximum of 10 mW both in the base station (3) and also the display modules (2),
comprising the steps:
- bidirectional transmission of data in the ISM band with the low-energy radio protocol between at least one low-energy radio system (2b) in one of the display modules (2) and the low-energy radio system (5) of the base station (3),
- wherein according to the low-energy radio protocol, data from a low-energy radio system (2b) of one of the display modules (2) are transmitted to the low-energy radio system (5) in the base station (3) exclusively in time slots, wherein as a result of the time slot method, the low-energy radio system (5) of the base station (3) knows when transmission from the low-energy radio systems (2b) of the display modules (2) are to be expected,
- transmission of data between the WLAN radio systems arranged in the housing (4) of the base station (3) in the ISM band but according to the IEEE standard 802.11 for communication in radio networks and a plurality of WLAN clients (8), wherein in the case of joint usage of the ISM band collisions can occur with the data transmissions between the electronic display modules (2) and the base station (3),
- preventing the transmissions of the WLAN radio system (5) arranged in the housing (4) of the base station (3) for the transmission of data when and as long as a data transmission takes place from at least one low-energy radio system (2b) of one of the display modules (2) to the low-energy radio system (5) in the base station (3), wherein however any transmissions of the WLAN client (8) which possibly still take place in this time interval are transmitted parallel to the WLAN radio system (6) of the base station (3) .

10. The method according to claim 9, **characterized in that** a control signal for the duration of the data transmission is transmitted from each low-energy radio system (2b) of one of the display modules (2) to the low-energy radio system (5) in the base station (3) via a control line (7) between the WLAN radio system (6) arranged in the housing (4) of the base station (3) and the low-energy radio system (5) in the base station (3) and the control signal prevents the transmission of the WLAN radio system (6) arranged in the housing (4) of the base station (3).

11. The method according to claim 10, **characterized in that** via the control line (7) in addition a control signal for the duration of the data transmission is transmitted from the low-energy radio system (5) in the base station (3) to each low-energy radio system (2b) of one of the display modules (2) and the control signal prevents the transmissions of the WLAN radio system (6) arranged in the housing (4) of the base station (3).

12. Base station (3) arranged in a housing (4) for an electronic shelf label system, wherein a low-energy radio system (5) is arranged in the housing (4) which is adapted for a bidirectional data transmission in an ISM band between the base station (3) and a plurality of display modules (2) with a low-energy radio protocol, wherein each display module (2) has at least one battery for the power supply of the display module, at least one passive non-luminous display unit (2a) and a low-energy radio system (2b) having a maximum transmission power of 10 mW, **characterized in that**
- the low-energy radio protocol is programmed in such a manner that data transmissions from a low-energy radio system (2b) of one of the display modules (2) to the low-energy radio system (5) in the base station (3) take place exclusively in time slots, wherein as a result of the time slot method, the low-energy radio system (5) of the base station (3) knows when transmissions are to be expected from the low-energy radio system (2b) of the display modules (2),
- a WLAN radio system (6) is additionally arranged in the housing (4) of the base station (3), which is adapted for a data transmission in the ISM band but according to the IEEE standard 802.11 for communication in radio networks between the base station (3) and a plurality of WLAN clients (8), wherein in the case of joint use of the ISM band collisions can occur with the data transmissions between the electronic display modules (2) and the base station (3),
- the transmission power of the low-energy radio systems (2a, 5) operated with the low-energy radio protocol is a maximum of 10 mW both in the base station (3) and also the display modules (2), and
- a controller is arranged in the housing (4) which is adapted in such a manner that transmissions of the WLAN radio system (6) arranged in the housing of the base station (3) are prevented when and as long as a data transmission takes place from at least one low-energy radio system (2b) of one of the display modules (2) to the low-energy radio system (5) in the base station (3), wherein however any transmissions of the WLAN client (8) which may still take place in this time interval are transmitted parallel to the WLAN radio system (6) of the base station (3).

13. The base station (3) arranged in a housing (4) according to claim 12, **characterized in that** the controller is additionally adapted in such a manner that transmissions of the WLAN radio system (6) arranged in the housing (4) of the base station (3) are prevented when and as long as a data transmission takes place from the low-energy radio system (5) in the base station (3) to at least one low-energy radio system (2b) of one of the display modules (2).

14. The base station (3) arranged in a housing (4) according to claim 12 or 13, **characterized in that** the controller has a control line (7) between the WLAN radio system (6) arranged in the housing (4) of the base station (3) and the low-energy radio system (5) in the base station (3), which is adapted for transmission of a control signal for the duration of the data transmission from at least one low-energy radio system (2b) of one of the display modules (2) to the low-energy radio system (5) in the base station (3) .

15. The base station (3) arranged in a housing (4) according to claim 14, **characterized in that** the control line (7) is additionally adapted for transmission of a control signal for the duration of the data transmission from the low-energy radio system (5) in the base station (3) to at least one low-energy radio system (2b) of one of the display modules (2).

16. The base station (3) arranged in a housing (4) according to claim 15, **characterized in that** the controller comprises a switching element connected to the control line (7) which in the case of an active control signal, prevents the transmissions of the WLAN radio system (6) arranged in the housing (4) of the base station (3).

## Revendications

1. Système d'étiquetage électronique de gondoles (1) comprenant:
- plusieursmodules d'affichage (2) électroniques, chaquemodule d'affichage (2) comportant au moins une batterie pour l'alimentation en tension du module d'affichage (2), au moins une unité d'affichage (2a) passive, non lumineuse et un système radio basse énergie(2b) qui est aménagé pour un transfert de données bidirectionnel dans une bande ISM, avec un protocole radio basse énergie,
- un poste de base (3) avec un boîtier (4) dans lequel est placé un système radio basse énergie (5), qui est aménagé pour un transfert de données bidirectionnel dans la bande ISM entre le poste de base (3) et chaque module d'affichage (2),avec le protocole radio basse énergie,
- le protocole radio basse énergieétant programmé de telle sorte que des transferts de données d'un système radio basse énergie (2b) de l'un des modules d'affichage (2) vers le système radio basse énergie (5) dans le poste de base (3) s'effectuent exclusivement dans des créneaux temporels, sachant que du fait du procédé par créneaux temporels, il est connu par le système radio basse énergie (5) du poste de base (3) quand des émissions sont à attendre de la part des systèmes radio basse énergie (2b) des modules d'affichage (2),
- la puissance d'émission des systèmes radio basse énergie (2b, 5) fonctionnant avec le protocole radio basse énergie aussi bien dans le poste de base (3) qu'également dans les modules d'affichage (2)s'élevant à un maximum de 10 mW,
- un système radio WLAN (6), placé dans le boîtier (4) du poste de base (3), en supplément du système radio basse énergie (5) qui est également aménagé pour un transfert de données dans la bande ISM, toutefois selon le standard IEEE 802.11, pour la communication au sein de réseaux radio entre le poste de base (3) et plusieurs clients WLAN (8), sachant qu'une utilisation commune de la bande ISM risque de provoquer des collisions avec les transferts de données entre les modules d'affichage (2) électroniques et le poste de base (3),
- un système de commande qui est aménagé de telle sorte que des émissions du système radio WLAN (6) placé dans le boîtier (4) du poste de base(3) soient empêchées, si et aussi longtemps qu'un transfert de données a lieu d'au moins un système radio basse énergie(2b) de l'un des modules d'affichage (2) vers le système radio basse énergie (5) dans le poste de base (3), sachant que des émissions des clients WLAN (8) se poursuivant éventuellement dans cette période sont transférées parallèlement au système radio WLAN (6) du poste de base (3).

2. Système d'étiquetage électronique de gondoles (1) selon la revendication 1, **caractérisé en ce que** le système de commande est aménagé en outre de sorte que des émissions du système radio WLAN (6) placé dans le boîtier (4) du poste de base (3) soient empêchées si et aussi longtemps qu'un transfert de données a lieu du système radio basse énergie(5) dans le poste de base (3) vers au moins un système radio basse énergie (2b) de l'un des modules d'affichage (2).

3. Système d'étiquetage électronique de gondoles (1) selon la revendication 1 ou 2, **caractérisé en ce que** le système radio basse énergie (2b, 5) du poste de base (3) et/ou des modules d'affichage (2) comporte uné metteur-récepteur pour le transfert de données bidirectionnel.

4. Système d'étiquetage électronique de gondoles (1) selon l'une quelconque des revendications 1 à 3, caractérisé en ce quelesystème radio WLAN (6) du poste de base (3) et/ou des clients WLAN (8) comporte uné metteur-récepteur pour le transfert de données.

5. Système d'étiquetage électronique de gondoles (1) selon l'une quelconque des revendications 1 à 4, **caractérisé en ce que** le système de commande comporte une ligne de commande (7) entre le système radio WLAN (6) placé dans le boîtier (4) du poste de base (3) et le système radio basse énergie(5) dans le poste de base (3),qui est aménagée pour transférer un signal de commande pendant la durée du transfert de données d'au moins un système radio basse énergie (2b) de l'un des modules d'affichage (2) vers le système radio basse énergie(5) dans le poste de base (3).

6. Système d'étiquetage électronique de gondoles (1) selon la revendication 5, **caractérisé en ce que** la ligne de commande (7) est aménagée par ailleurs pour transférer un signal de commande pendant la durée du transfert de données du système radio basse énergie (5) dans le poste de base (3) vers au moins un système radio basse énergie (2b) de l'un des modules d'affichage (2).

7. Système d'étiquetage électronique de gondoles (1) selon la revendication 5 ou 6, **caractérisé en ce que** le système de commande comprend un organe de commutation relié avec la ligne de commande (7), qui lors que le signal de commande est actif, empêche les émissions du système radio WLAN (6) placé dans le boîtier (4) du poste de base (3).

8. Système d'étiquetage électronique de gondoles (1) selon l'une quel con que des revendications 1 à 7, **caractérisé en ce que** l'écart entre le système radio basse énergie(5) et le système radio WLAN (6) dans le poste de base (3) est inférieur à l'écart entre chaque client WLAN (8) et le système radio basse énergie(5) dans le poste de base (3).

9. Procédé destiné à faire fonctionner un système d'étiquetage électronique de gondoles (1) avec plusieurs modules d'affichage (2) électroniques, chaque module d'affichage (2) comportant au moins une batterie pour l'alimentation en tension du module d'affichage (2), au moins une unité d'affichage (2a) passive, non lumineuse et un système radio basse énergie (2b), ainsi qu'avec un poste de base (3) avec un boîtier (4), dans lequel sont placés un système radio basse énergie (5) et en supplément un système radio WLAN (6), la puissance d'émission des systèmes radio basse énergie (2b, 5) fonctionnant avec un protocole radio basse énergie aussi bien dans le poste de base (3) qu'également dans les modules d'affichage (2) s'élevant à un maximum de 10 mW, comprenant les étapes :
- du transfert bidirectionnel de données dans la bande ISM avec le protocole radio basse énergie entre au moins un système radio basse énergie(2b) dans l'un des modules d'affichage (2) et le système radio basse énergie (5) du poste de base (3),
- selon le protocole radio basse énergie, des données étant transférées d'un système radio basse énergie (2b) de l'un des modules d'affichage (2) vers le système radio basse énergie (5) dans le poste de base (3) exclusivement dans descréneaux temporels, sachant que du fait du procédé par créneaux temporel, il est connu par le système radio basse énergie (5) du poste de base (3) quand des émissions sont à attendre de la part des systèmes radio basse énergie (2b) des modules d'affichage (2),
- du transfert de données entre le système radio WLAN placé dans le boîtier (4) du poste de base (3) dans la bande ISM, toutefois selon le standard IEEE 802.11 pour la communication au sein de réseaux radio et plusieurs clients WLAN (8), sachant qu'une utilisation commune de la bande ISM risque de provoquer des collisions avec les transferts de données entre les modules d'affichage (2) électroniques et le poste de base (3),
- de l'empêchement des émissions du système radio WLAN (5) placé dans le boîtier (4) du poste de base (3) pour le transfert de données, sietaussi longtemps qu'un transfert de données a lieu d'au moins un système radio basse énergie (2b) de l'un des modules d'affichage (2) vers le système radio basse énergie (5) dans le poste de base (3), sachant que des émissions des clients WLAN (8) se poursuivant éventuellement dans cette période sont transférées parallèlement au système radio WLAN (6) du poste de base (3).

10. Procédé selon la revendication 9, **caractérisé en ce que** par l'intermédiaire d'une ligne de commande (7) entre le système radio WLAN (6) placé dans le boîtier (4) du poste de base (3) et le système radio basse énergie (5) dans le poste de base (3), un signal de commande est transféré pendant la durée du transfert de données de chaque système radio basse énergie (2b) de l'un des modules d'affichage (2) vers le système radio basse énergie (5) dans le poste de base (3) et le signal de commande empêche les émissions du système radio WLAN (6) placé dans le boîtier (4) du poste de base(3) .

11. Procédé selon la revendication 10, **caractérisé en ce que** par l'intermédiaire de la ligne de commande (7), un signal de commande est transféré par ailleurs pendant la durée du transfert de données du système radio basse énergie (5) dans le poste de base (3) vers chaque système radio basse énergie (2b) de l'un des modules d'affichage(2) et le signal de commande empêche les émissions du système radio WLAN (6) placé dans le boîtier (4) du poste de base (3).

12. Poste de base (3) placé dans un boîtier (4) pour un système d'étiquetage électronique de gondoles, dans le boîtier (4) étant placé un système radio basse énergie(5) qui est aménagé pour un transfert de donné es bidirectionnel dans une bande ISM entre le poste de base (3) et plusieurs modules d'affichage (2),avec un protocole radio basse énergie, chaque module d'affichage (2) comportant au moins une batterie pour l'alimentation en tension du module d'affichage, au moins une unité d'affichage (2a) passive, non lumineuse et un système radio basse énergie (2b), avec une puissance d'émission maximale de 10 mW, **caractérisé en ce que**
- le protocole radio basse énergie est programmé de telle sorte que des transferts de données d'un système radio basse énergie (2b) de l'un des modules d'affichage (2) vers le système radio basse (5) énergie dans le poste de base (3) s'effectuent exclusivement dans des créneaux temporels, sachant que du fait du procédé par créneaux temporel, il est connu par le système radio basse énergie(5) du poste de base (3) quand des émissions sont à attendre de la part des systèmes radio basse énergie (2b) des modules d'affichage (2),
- dans le boîtier (4) du poste de base (3) est placé en supplément un système radio WLAN (6) qui est aménagé pour un transfert de données dans la bande ISM, toutefois selon le standard IEEE 802.11,pour la communication au sein de réseaux radio entre leposte de base (3) et plusieurs clients WLAN (8), sachant qu'une utilisation commune de la bande ISM risque de provoquer des collisions avec les transferts de données entre les modules d'affichage (2) électroniques et le poste de base (3,
- la puissance d'émission des systèmes radio basse énergie (2a, 5) fonctionnant avec un protocole radio basse énergie aussi bien dans le poste de base (3) qu'également dans les modules d'affichage (2) s'élève à un maximum de 10 mW et
- dans le boîtier (4) est placé un système de commande qui est aménagé de telle sorte que des émissions du système radio WLAN (6) placé dans le boîtier duposte de base (3) soient empêchées, sietaussi longtemps qu'un transfert de données a lieu d'au moins un système radio basse énergie(2b) de l'un des modules d'affichage (2) vers le système radio basse énergie(5) dans leposte de base (3), sachant que des émissions des clients WLAN (8) se poursuivant éventuellement dans cette période sont transférées parallèlement au système radio WLAN (6) du poste de base (3).

13. Poste de base (3) placé dans un boîtier (4) selon la revendication 12, **caractérisé en ce que** le système de commande est aménagé par ailleurs de sorte que des émissions du système radio WLAN (6) placé dans le boîtier (4) du poste de base (3) soient empêchées si et aussi longtemps qu'un transfert de données a lieu du système radio basse énergie(5) dans leposte de base (3) vers au moins un système radio basse énergie(2b) de l'un des modules d'affichage (2).

14. Poste de base (3) placé dans un boîtier (4) selon la revendication 12 ou 13, **caractérisé en ce que** le système de commande comporte une ligne de commande (7) entre le système radio WLAN (6) placé dans le boîtier (4) duposte de base (3) et le système radio basse énergie (5) dans leposte de base (3),qui est aménagée pour transférer un signal de commande pendant la durée du transfert de données d'au moins un système radio basse énergie(2b) de l'un des modules d'affichage (2) vers le système radio basse énergie(5) dans leposte de base (3).

15. Poste de base (3) placé dans un boîtier (4) selon la revendication 14, **caractérisé en ce que** la ligne de commande (7) est aménagée par ailleurs pour transférer un signal de commandependant la durée du transfert de données du système radio basse énergie(5) dans leposte de base (3) vers au moins un système radio basse énergie(2b) de l'un des modules d'affichage (2).

16. Poste de base (3) placé dans un boîtier (4) selon la revendication 15, **caractérisé en ce que** le système de commande comprend un organe de commutation relié avec la ligne de commande (7), qui lorsque le signal de commande est actif, empêche les émissions du système radio WLAN (6) placé dans le boîtier (4) du poste de base (3).
